# EUROPÄISCHE PATENTSCHRIFT

(11) **EP 1 022 047 B1**
(45) Veröffentlichungstag und Bekanntmachung des Hinweises auf die Patenterteilung: **14.09.2005**
(21) Anmeldenummer: 99126139.7
(22) Anmeldetag: 29.12.1999
(51) Int. Cl.: B01D 53/56, F23G 7/06

(54) **Verfahren zur thermischen N2O-Zersetzung**
Process for the thermal decomposition of N2O
Procédé pour la décomposition thermique de N2O

(30) Priorität: 20.01.1999 DE 19902109
(43) Veröffentlichungstag der Anmeldung: 26.07.2000
(73) Patentinhaber: BASF Aktiengesellschaft, 67056 Ludwigshafen (DE)
(72) Erfinder: Watzenberger, Otto, Dr., 68199 Mannheim (DE); Agar, David, Prof.Dr., 44229 Dortmund (DE)
(74) Vertreter: Isenbruck, Günter

(56) Entgegenhaltungen:
- EP-A- 0 524 736
- DE-A- 4 116 950
- DE-A- 19 533 715
- US-A- 5 547 650

## Beschreibung

Die Erfindung betrifft ein Verfahren zur thermischen N₂O-Zersetzung in N₂O-haltigen Gasen und dafür geeignete Reaktoren.

N₂O entsteht als Nebenprodukt bei Prozessen, bei denen HNO₃ in flüssiger Phase als Oxidationsmittel eingesetzt wird. Insbesondere bei der Umsetzung von Alkoholen, Aldehyden und Ketonen, z.B. Cyclohexanol und Cyclohexanon zu Adipinsäure, Acetaldehyd zu Glyoxal oder Glyoxal zu Glyoxylsäure werden beträchtliche Mengen an N₂O freigesetzt. Dabei enthalten die N₂O-haltigen Gase vergleichbar große Mengen an NOₓ.

N₂O kommt ein gewisses Schädigungspotential für die Erdatmosphäre zu. Es gilt in der Stratosphäre als eine wesentliche Quelle für NO. Dieses wiederum trägt wesentlich zum Abbau von Ozon in der Stratosphäre bei. Weiterhin gilt N₂O als Treibhausgas, wobei das Erderwärmungspotential dem etwa 290-fachen des Potentials von CO₂ entsprechen soll.

Daher wird gefordert, in industriellen Abgasen den N₂O-Gehalt möglichst stark zu vermindern. Es ist bekannt, daß sich N₂O erst ab Temperaturen oberhalb 800°C in Abwesenheit eines Katalysators merklich zu zersetzen beginnt. Zudem ist bekannt, daß mit zunehmender Temperatur die Zersetzung nicht mehr wie erwünscht zu N₂ und O₂ abläuft, sondern ab 1000°C zunehmend unter Bildung von NO erfolgt. Die exothermische Zersetzung von NO zu N₂ und O₂ erfolgt erst ab Temperaturen von 1500°C mit hoher Geschwindigkeit.

Die katalytische Zersetzung von N₂O ist seit langem bekannt. In der WO 93/04774 sind geeignete silberhaltige Katalysatoren zur Zersetzung von N₂O beschrieben.

Die katalytischen Verfahren zur N₂O-Zersetzung weisen den Nachteil auf, daß bereits geringe chemische und mechanische (Staub-)Verunreinigungen im ppm-Bereich und/oder thermische Belastungen ab etwa 700 bis 800°C zu einem Aktivitätsverlust bis hin zur völligen Zerstörung des Katalysators führen können. Für katalytische Verfahren ist daher eine gleichbleibende wohldefinierte Gaszusammensetzung Voraussetzung. Ferner kann es durch starke Fluktuationen im N₂O-Gehalt der zu reinigenden Gase aufgrund der starken Exothermie der Zersetzungsreaktion durch wandernde Temperaturfronten zur Ausbildung von starken Hot-spot-Temperaturen und damit zu einer lokalen Schädigung des Katalysators kommen. Daher besteht ein großes Interesse an Verfahren, die auf rein thermischer Basis eine Zersetzung des N₂O ermöglichen.

Thermische Verfahren zur Reinigung von mit organischen Bestandteilen verunreinigten Abgasen sind bekannt. Bekannt sind klassische Verbrennungsmuffeln, bei denen das Abgas zusammen mit Brennstoff/Luft-Gemischen verbrannt wird. Ein derartiges Verbrennungsverfahren zur Verbrennung von N₂O-haltigen Abgasen ist beispielsweise in der DE-A- 41 16 950 beschrieben. Das Verfahren eignet sich aufgrund der Komplexität der Brennkammer und der damit verbundenen hohen Investitionskosten vor allem für geringe Gasmengen.

Gemäß EP-A-0 555 110 wird ein N₂O-haltiges Gas unter Brennstoffzusatz bei sehr hohen Temperaturen direkt in der Flamme verbrannt, um eine Bildung von NOₓ zu erreichen. Die Umsetzung gelingt jedoch nur mit geringen Ausbeuten.

In der EP-A-0 359 286 ist ein Verfahren zur Entfernung von N₂O aus dem Produktgas aus der Ammoniakverbrennung beschrieben. Dabei wird das Produktgas aus der Ammoniakverbrennung nicht sofort abgekühlt, sondern erst nach einer Verweilzeit von 0,1 bis 3 sec. Hierdurch wird ein Großteil des N₂O zu Stickstoff und Sauerstoff zersetzt. Die Verbrennungsabgase können zudem mit einem Metall- oder Metalloxid-Katalysator kontaktiert werden. Das Verfahren ist auf die Verwendung für die N₂O-Abtrennung nach der Ammoniakverbrennung zugeschnitten und nur dadurch wirtschaftlich, daß das N₂O-haltige Gas bereits auf der erforderlichen hohen Temperatur anfällt.

Die DE-A-195.33.715 betrifft ein Verfahren zur Entfernung von NOₓ und N₂O, die als Nebenprodukt bei Prozessen anfallen, bei denen HNO₃ in flüssiger Phase als Oxidationsmittel eingesetzt wird. Das Verfahren umfasst das Leiten des Gasstroms (A) durch eine Stufe zur Absorption der Stickstoffoxide außer N₂O in einem Absorptionsmittel, oder Umsetzung der Stickstoffoxide außer N₂O mit einem Absorptionsmittel und (B) durch eine Stufe zur Reduktion von N₂O.

Schließlich beschreibt die EP-A-0.524.736 ein Verfahren und Vorrichtung zur Umsetzung von einem Gasgemisch mittels eines Rekuperativwärmetauschers. Die Temperatur des Reaktors wird üblicherweise zwischen 760-1925 °C gehalten. Es wird auf die Verwendung des Verfahren zur Entfernung von Distickstoffoxid (N₂O) hingewiesen.

Alle bekannten thermischen Verbrennungs- oder Zersetzungsverfahren zur Zersetzung von N₂O weisen den Nachteil auf, daß zur Erzeugung der erforderlichen hohen Temperaturen zusätzliche Brennstoffe verbrannt werden müssen. Des weiteren erweist es sich als technisch schwierig, sicherzustellen, daß die Temperatur in der Brennzone geregelt werden kann, um eine Zersetzung von zusätzlich im Reaktionsgas enthaltenem NO zu verhindern oder eine Bildung von NOₓ aus dem N₂O zu verhindern.

Aufgabe der vorliegenden Erfindung ist die Bereitstellung eines Verfahrens zur selektiven thermischen Zersetzung von N₂O in NOₓ und N₂O-haltigen Gasen, die als Nebenprodukt bei Prozessen anfallen, bei denen HNO₃ in flüssiger Phase als Oxidationsmittel eingesetzt wird.

Da das N₂O-haltige zu reinigende Gas größere Mengen an NOₓ enthält, das nach erfolgter N₂O-Entfernung für die Umsetzung zu Salpetersäure, vollständig zur Verfügung stehen sollte, sollte nur sellektiv das N₂O zersetzt werden, das NO jedoch vollständig unzersetzt im gereinigten Gas enthalten bleiben.

Die Aufgabe wird gemäß Anspruch 1 gelöst durch Verwendung von Rekuperativwärmetauschem oder Regenerativwärmetauschern zur thermischen N₂O-Zersetzung in N₂O-haltigen Gasen, und anschließende absorptive NOₓ-Abtrennung und HNO₃-Erzeugung

Die Aufgabe wird zudem gemäß Anspruch 1 gelöst durch ein Verfahren zur thermischen N₂O-Zersetzung in N₂O-haltigen Gasen bei einer Temperatur im Bereich von 800 bis 1200°C, bei dem das N₂O-haltige Gas durch einen oder mehrere Rekuperativwärmetauscher oder Regenerativwärmetauscher in der Weise geführt wird, daß das umzusetzende Gas beim Führen durch eine Wärmeträgerfüllung auf die Temperatur im Bereich von 800 bis 1200°C erwärmt und das enthaltene N₂O thermisch zersetzt wird, und das umgesetzte Gas durch Wärmetausch unter Erwärmung der Wärmeträgerfüllung und des umzusetzenden Gases abgekühlt wird.

Dabei kann die Wärmeträgerfüllung z.B. als Inertpartikelfüllung der Wärmetauscher ausgeführt sein.

Es wurde erfindungsgemäß gefunden, daß die in EP-A- 0 359 286 beschriebene thermische Zersetzung von N₂O vorteilhaft in Rekuperativwärmetauschern oder Regenerativwärmetauschern, die mit Inertpartikeln gefüllt sind, durchgeführt werden kann, wobei nach der Anfahrphase kein weiterer Energieeintrag erforderlich ist. Es wurde gefunden, daß sich N₂O bereits bei Temperaturen von etwa 800°C und Verweilzeiten von etwa 2 Sekunden thermisch an Inertoberflächen vollständig zersetzen läßt. Dabei läßt sich N₂O in Gegenwart von NOₓ vollständig zersetzen, wobei kein weiteres NOₓ gebildet wird.

Derartige Gase können aus den eingangs beschriebenen Quellen stammen.

Die Zersetzung wird bei Temperaturen von 800 bis 1200°C, vorzugsweise 850 bis 1100°C, besonders bevorzugt 900 bis 1000 °C durchgeführt. Dabei beträgt die Verweilzeit des Gases in der Inertmischung bei der Zersetzungstemperatur vorzugsweise 0,5 bis 60s, besonders bevorzugt 2 bis 20s.

Die Verweilzeit wird der jeweiligen Temperatur so angepaßt, daß der erwünschte Abbaugrad an N₂O erreicht wird und entsprechend die NOₓ-Bildung bzw. NOₓ-Zersetzung auf das entsprechend den jeweiligen betrieblichen Randbedingungen gegebene Maß begrenzt bleibt.

Der gewählte Zersetzungsdruck kann den äußeren Randbedingungen (Prozeßdruck, etc.) entsprechend der wirtschaftlich vorteilhaftesten Lösung in weitem Bereich angepaßt werden. Das Verfahren ist prinzipiell nicht auf einen bestimmten Druckbereich eingegrenzt. Erfahrungsgemäß liegt der wirtschaftlich vorteilhafteste Arbeitsbereich bei 1 bis 10 bar.

Im rekuperativ arbeitenden Wärmetauscher erfolgt der Wärmeaustausch zwischen den Gasen über die Rohrwandungen. In den regenerativ arbeitenden Wärmetauscher-Reaktoren fungieren Schüttungen aus in der Regel inertem Material als Wärmespeicher und Wärmeaustauschermedien. Als Wärmespeichermedien können Partikel verschiedenster Form wie zufällig geformte Partikel oder regelmäßige Formkörper eingesetzt werden. Auch die Verwendung von Wabenkörpern ist möglich. Beispielsweise haben sich in den Laborversuchen γ-Al₂O₃-Ringe (Pural ® von Condea) in den Dimensionen 5x5x3 mm gut bewährt. Es eignen sich allgemein keramische Materialien wie SiC, SiO₂ und viele andere mehr. Auch metallische Einbauten sind denkbar. Wesentlich ist die thermische Beständigkeit bis ca. 1200°C und das Vorhandensein einer großen spezifischen Oberfläche, da offensichtlich der Stoß des thermisch angeregten N₂O-Moleküls mit der Oberfläche zu dessen Zerfall führt. Eine spezifische katalytische Funktion zur N₂O-Zersetzung ist nicht erforderlich, aber auch nicht hinderlich.

Vorzugsweise werden der oder die Wärmetauscher so regenerativ betrieben, daß nach dem Start der Umsetzung keine externe Energiezufuhr notwendig ist. Dabei beträgt die Temperatur des in den oder die Wärmetauscher eintretenden Gases vorzugsweise 10 bis 300°C, besonders bevorzugt 15 bis 50°C, insbesondere Umgebungstemperatur (Raumtemperatur). Durch das erfindungsgemäße Verfahren ist es möglich, N₂O-haltige Abgase einzusetzen und zu reinigen, die bei Temperaturen anfallen, die wesentlich niedriger als die Umsetzungstemperaturen sind. Damit ist das Verfahren universell einsetzbar.

Im Extremfall sehr guter Wärmerückgewinnung beispielsweise bei Verwendung regenerativer Wärmetauscher liegt die Temperatur des in den regenerativen Wärmetauscher eintretenden Gases nur einige 10 K über der Temperatur des austretenden Gases. Daher genügt die Freisetzung geringer Reaktionswärmen zur Sicherstellung eines autothermen Betriebs. D.h. auch Gase mit geringen N₂O-Gehalten können ohne externe Energiezufuhr in diesen Apparaten durch thermische N₂O-Zersetzung gereinigt werden.

Überschüssige Reaktionswärme, die bei sehr hohen N₂O-Gehalten frei wird, kann beispielsweise mit einem in den Hochtemperaturbereich des regenerativen Wärmetauschers eingebauten Dampfregister unter Erzeugung von Heißdampf abgeführt werden. Alternativ besteht die Möglichkeit der Teilgasausschleusung (10-30%) aus der Hochtemperaturzone des Regenerators.

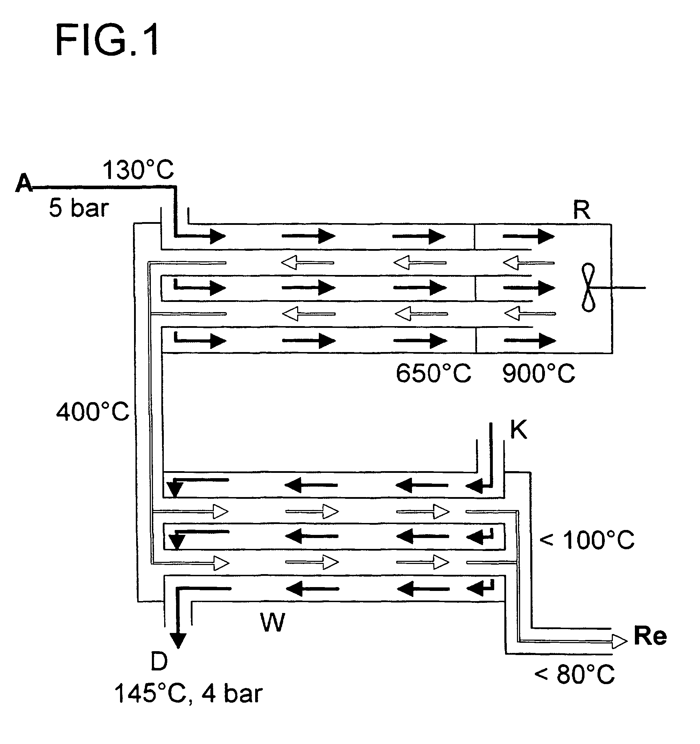

Die Erfindung wird nachstehend anhand der Zeichnung näher erläutert, in der
Figur 1 eine Anlage mit einem Rekuperativwärmetauscher zeigt,
Figur 2 eine Anlage mit einem Regenerativwärmetauscher zeigt und
Figur 3 eine Anlage mit einem Regenerativwärmetauscher in Rotationsausführung mit Heißgasausschleusung zeigt.

Dabei bedeuten die verwendeten Bezugszeichen folgendes:
- K:: Kühlwasser
- W:: Wärmetauscher
- D:: Dampf
- R:: Reaktor
- A:: N₂O-haltigen Abgas
- S:: Spülgas
- Re:: Reingas
- x%:: x% Heißgasausschleusung

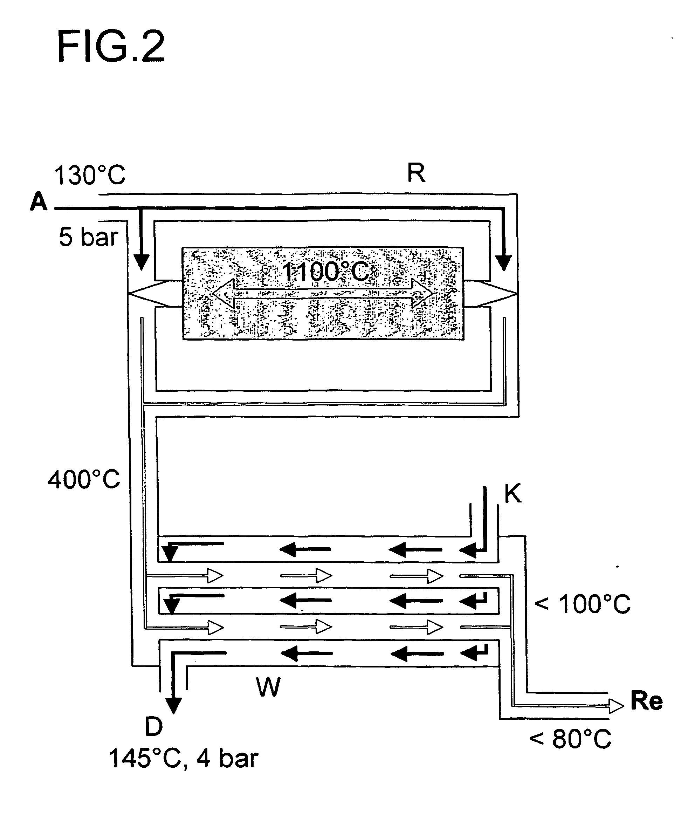

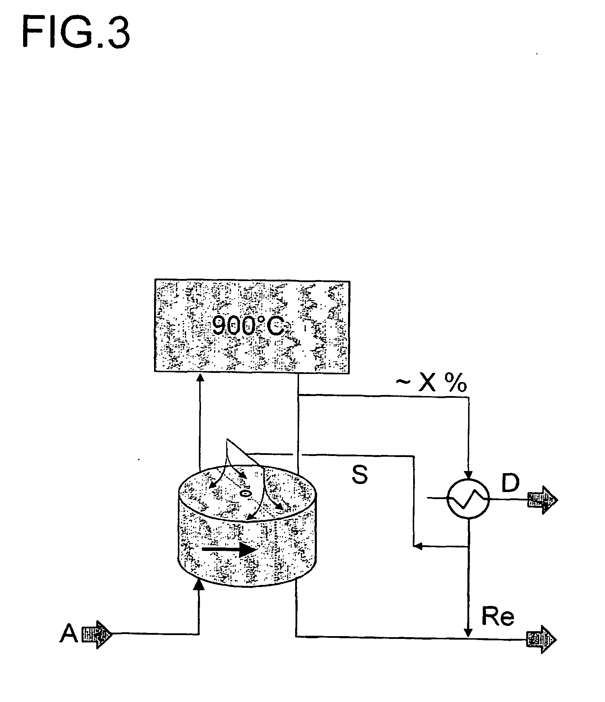

Der Regenerativwärmetauscher kann sowohl als Festbett mit periodischer Strömungsumkehr (Figur 2), wie auch in rotierender Festbettausführung (Figur 3) gestaltet werden.

Reaktoren zur regenerativen thermischen Oxidation sind beispielsweise im VDI-Bericht 1993, Seiten 69 bis 89, beschrieben. Derartige Reaktoren werden beispielsweise von KEU-CITEX Energie- und Umwelttechnik, Krefeld, hergestellt.

Geeignete keramische Werkstoffe für die regenerative thermische Ablaufreinigung sind beispielsweise in Chemie-Ingenieur-Technik Nr. 9, 1995, Seiten 1192 bis 1993 beschrieben.

Durch die Exothermie der Reaktion heizt sich das zu reinigende Gas auf. Die Wärme des heißen, gereinigten Gases wird genutzt, um Frischgas auf Reaktionstemperatur vorzuheizen. Diese Vorheizung kann technisch beispielsweise rekuperativ durch Gas-Gas-Wärmetauscher oder regenerativ durch Wärmeüberträgerpackungen oder Schüttungen oder Wabenkörper erfolgen. Regenerative Gas-Gas- Wärmetauscher arbeiten durch die großen Wärmeaustauscherflächen mit sehr hohem Wirkungsgrad.

Erfindungsgemäß werden die hohen thermischen Wirkungsgrade von Regenerativwärmetauschern mit der thermischen N₂O-Zersetzungsreaktion kombiniert. Dazu wird eine mit Inertpartikeln, z.B. Al₂O₃-Ringen, gefüllte Festbettschüttung eingesetzt. Das Festbett wird anfänglich in der Reaktionszone (dem Hochtemperaturbereich) auf 800 - 1000°C hochgeheizt. Dann wird das N₂O-haltige Gas in das Festbett geleitet. Das N₂O-haltige Gas heizt sich durch Wärmeaustausch auf 800 - 1000°C auf und die Zersetzung des N₂O beginnt, setzt Wärme frei und erwärmt die Inertschüttung und das Gas. Die Temperaturerhöhung ist abhängig von verschiedenen Betriebsparametern, insbesondere von der N₂O-Konzentration, und kann durch Änderung der Betriebsparameter, z.B. der N₂O-Konzentration (Verdünnungsluft, Rückführung gereinigten Gases) beliebig eingestellt werden.

Durch das einströmende Gas kühlt die Regeneratoreingangszone ab, und der Bereich höherer Temperatur verschiebt sich in Richtung Reaktorausgang. Die Inertschüttung in Richtung Reaktorausgang wird dabei durch das durch die exotherme Reaktion aufgeheizte Gas erwärmt. Dabei wird gleichzeitig das Gas abgekühlt. Der in der Schüttung vorliegende Bereich hoher Temperatur verschiebt sich so in Richtung Reaktorausgang. Aus diesem Grunde muß die Strömungsrichtung nach einer gewissen Zeit umgekehrt werden, um zu verhindern, daß das Bett völlig abkühlt. Durch geeignete Wahl der Zeit zwischen zwei Strömungsrichtungswechseln gelingt es, einen Hochtemperaturbereich im Mittelteil der Schüttung zu stabilisieren. Durch geeignete Wahl der Schüttungslänge wird erreicht, daß die Ausgangs- und Eingangsbereiche der Schüttung auf sehr niedriger Temperatur, im Extremfall nur geringfügig über der Umgebungstemperatur liegt. Vorzugsweise wird man jedoch bei einer Temperatur arbeiten, die oberhalb der Kondensationstemperatur des ggf. Wasser-und NOₓ-haltigen Gases liegt, um Korrosionsprobleme zu vermeiden.

Durch den sehr effektiven Wärmeübergang in der Schüttung arbeitet das Regenerativverfahren mit einem sehr hohen thermischen Wirkungsgrad, d. h. es muß abgesehen vom Anfahrvorgang kein externer Energieeintrag erfolgen. Die Wärmefreisetzung durch die Reaktion sollte so hoch sein, daß die unvermeidlichen Wärmeverluste durch die Reaktionswärme ausgeglichen werden. Damit können in diesem Apparat auch gering N₂O-haltige Abgase ohne externe Energiezufuhr aufgearbeitet bzw. gereinigt werden.

Bei höheren N₂O-Konzentrationen im zu reinigenden Gas besteht die Möglichkeit einer Erzeugung von Hochtemperaturdampf. Dazu kann in den Hochtemperaturteil der Schüttung ein Dampfregister installiert werden, das in seiner Dampferzeugungskapazität auf die entsprechende Reaktionswärme und damit auf die N₂O- Konzentration angepaßt ist. Dampfregister, die bei 800 °C Gastemperatur Dampf erzeugen, sind aus der Kraftwerkstechnik bekannt. Man kann die Schüttung auf zwei Betten aufteilen und das Dampfregister zwischen die beiden Betten schalten.

Diese Option der Dampferzeugung ermöglicht es, die Aufgabe der Gasreinigung mit der wirtschaftlich vorteilhaften Möglichkeit der Dampferzeugung zu verbinden. Die Verwertung des erzeugten Dampfes hängt dann von den lokalen Gegebenheiten ab. Durch die hohe Reaktionstemperatur kann ein technisch sehr wertvoller, sehr hocherhitzter Dampf erzeugt werden (bis zu 500°C). Die Temperaturstufe des Dampfes kann jedoch leicht durch Einspritzen von Kondensatwasser auf ein gewünschtes niedrigeres Temperaturniveau abgesenkt werden.

Zur Wärmeabführung aus der oder nach der Hochtemperaturzone kann auch ein bereits gereinigter Teilgasstrom entnommen werden, wobei das ausgeschleuste Heißgas einem externen Wärmetauscher zur Energiegewinnung (z.B. Heißdampf) zugeführt werden kann. Dadurch kann eine Wärmeakkumulation im Regenerator bzw. Rekuperator vermieden werden.

Das N₂O-haltige Gas enthält große Mengen an NOₓ. Bei N₂O-haltigen Gasen, die als Nebenprodukt bei Prozessen anfallen, bei denen HNO₃ in flüssiger Phase als Oxidationsmittel eingesetzt wird, ist dies der Fall. Insbesondere bei der Umsetzung von Alkoholen, Aldehyden und Ketonen, z.B. Cyclohexanol und Cyclohexanon zu Adipinsäure, Acetaldehyd zu Glyoxal oder Glyoxal zu Glyoxylsäure werden neben beträchtlichen Mengen an N₂O nahezu äquimolare Mengen an NOₓ freigesetzt. NOₓ stellt in der chemischen Industrie einen wertvollen Rohstoff dar. Es wird üblicherweise in Waschkolonnen mit Luft oder Sauerstoff zu NO₂ aufoxidiert, in Wasser adsorbiert und letzlich zu HNO₃ (Salpetersäure) umgesetzt. Es besteht daher ein großes wirtschaftliches Interesse daran, das NOₓ aus dem N₂O-haltigen Abgas wirtschaftlich zu verwerten. Prinzipiell kann die absorptive NOₓ-Abtrennung und die HNO₃-Erzeugung in gewohnter Weise erfolgen. Das NOₓ-abgereinigte N₂O-haltige Gas enthält noch NOₓ, HNO₃ und Wasser und ist dementsprechend korrosiv.

Es ist demzufolge vorteilhafter, das N₂O in Gegenwart von NOₓ selektiv zu zersetzten. Dies hat auch noch den Vorteil, daß NOₓ, welches ggf. auch aus der Zersetzung des N₂O gebildet werden kann, letzlich auch als Rohstoff genutzt werden kann.

Es wurde gefunden, daß thermisch eine selektive Zersetzung des N₂O in Gegenwart von NOₓ gelingt. Wichtig für die Wirtschaftlichkeit ist dabei, daß im Zuge der thermischen Zersetzung kein wertvolles NOₓ thermisch zersetzt wird.

Ein Teil des NO₂ kann zu NO und O₂ abgebaut werden. Das NO wird jedoch nicht zersetzt und geht damit der nachfolgenden Verwertung für die Salpetersäureproduktion nicht verloren. Die endotherme Zersetzung des NO₂ zu NO wirkt nur moderierend auf die Gesamtwärmefreisetzung der Reaktion.

Die bei den angesprochenen chemischen Prozessen anfallenden NOₓ- und N₂O-haltigen Gase sind üblicherweise hochkonzentriert in NOₓ und N₂O. Somit ist die Exothermie der Reaktion entsprechend hoch. Deshalb wird zur Einstellung der Maximaltemperatur im Festbettreaktor vorzugsweise ein Dampfregister integriert. Dies ermöglicht die Nutzung der Reaktionswärme zur Hochtemperatur(HT)-Dampfgewinnung. Dieser HT-Dampf kann beispielsweise vorteilhaft zum Antrieb von Kompressoren für eine nachfolgende NOₓ-Absorption genutzt werden.

Alternativ zum Dampfregister kann zur Wärmeausschleusung ein Teilstrom des heißen Gases aus der Hochtemperaturzone entnommen werden. Dadurch wird in den nachfolgenden Teil der Schüttung nur soviel Wärme eingespeichert, wie zum Vorheizen des kalten N₂O-haltigen Abgases auf die Zersetzungstemperatur erforderlich ist.

Die Erfindung wird durch die nachstehenden Beispiele näher erläutert.

### Beispiele

### Beispiel 1:

Ein leeres Metallrohr aus V2A, L = 6 m, D = 3,17 mm wurde durch Außenbeheizung auf die Reaktionstemperatur 850-1000°C hochgeheizt. Dann wurde N₂O- und NO-haltige Luft durchgeströmt. Die Verweilzeit im heißen Reaktor wurde auf 5 und 20 Sekunden eingestellt.
Von dem Reaktoreingangsgas und von dem Reaktorausgangsgas wurden Gasproben gezogen und im Analysenlabor untersucht: NO-Bestimmung durch IR-Messung, N₂O-, O₂- und N₂-Bestimmung mittels GC. Die Meßungenauigkeiten sind auf die getrennten Analysen zurückzuführen. Die Versuche und die Versuchsergebnisse sind in nachstehender Tabelle zusammengefasst.

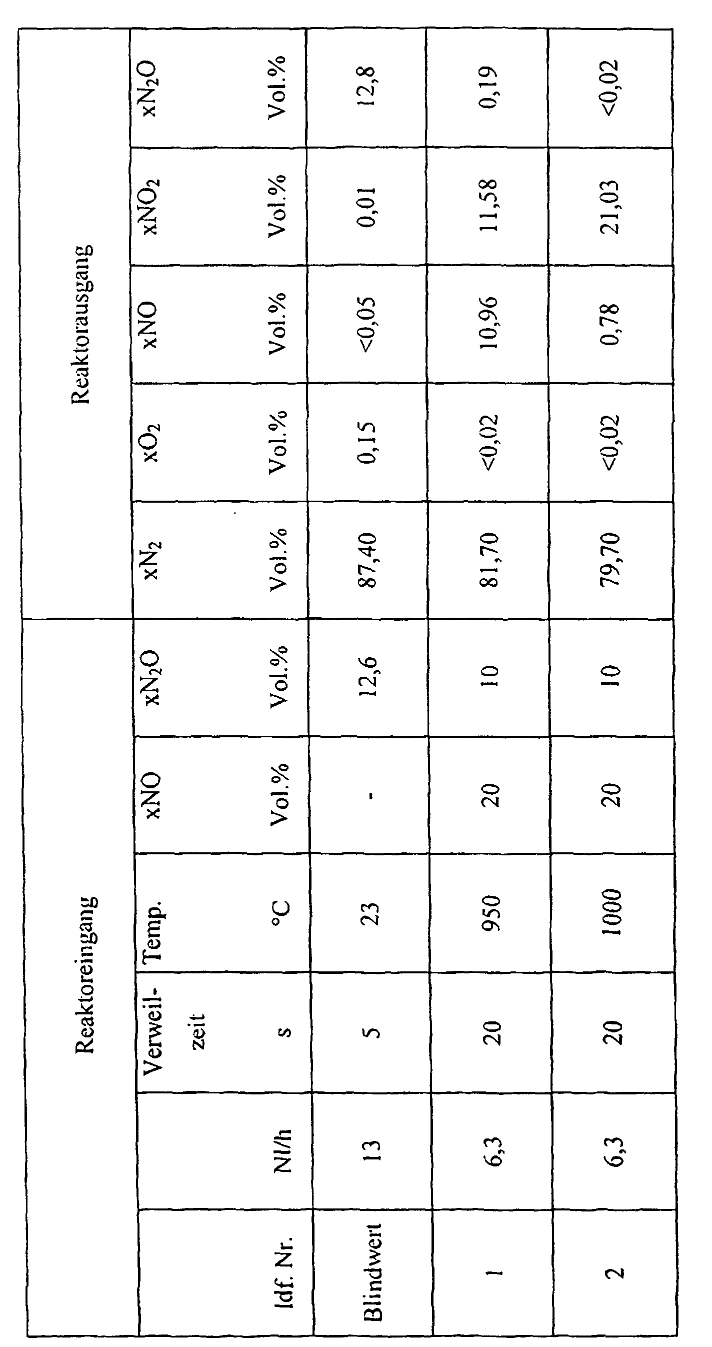

Es ist möglich, N₂O bereits bei ca. 950-1000°C und Verweilzeiten von 20s homogen weitgehend zu zersetzen. Gleichzeitig zeigen die Versuche, daß dabei im Rahmen der Meßgenauigkeit keine NO-Zersetzung stattfindet. Allenfalls findet eine gewisse Oxidation von NO zu NO₂ statt.

### Beispiel 2:

Die nachstehenden Versuche zur N₂O-Zersetzung wurden an einer heißen Inertschüttung durchgeführt. Dazu wurde ein Quarzreaktor, V = 72627,8 ml, verwendet. Dieser wurde strahlungsbeheizt auf Temperaturen bis zu maximal 800°C. Der Quarzreaktor war mit Al₂O₃-Ringen (Pural ® 5x5x2) mm gefüllt. Das Ergebnis ist in nachstehender Tabelle zusammengefasst.

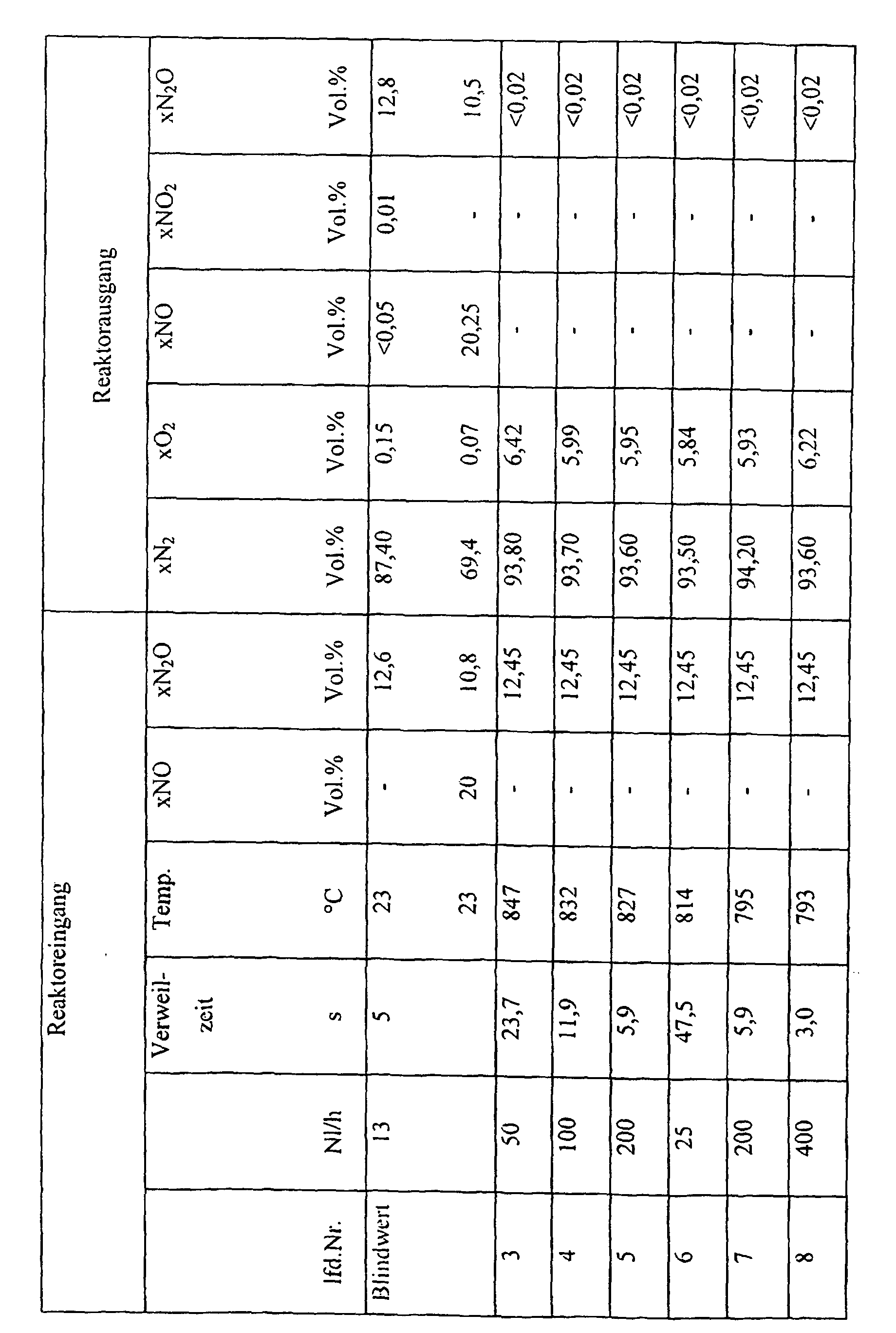

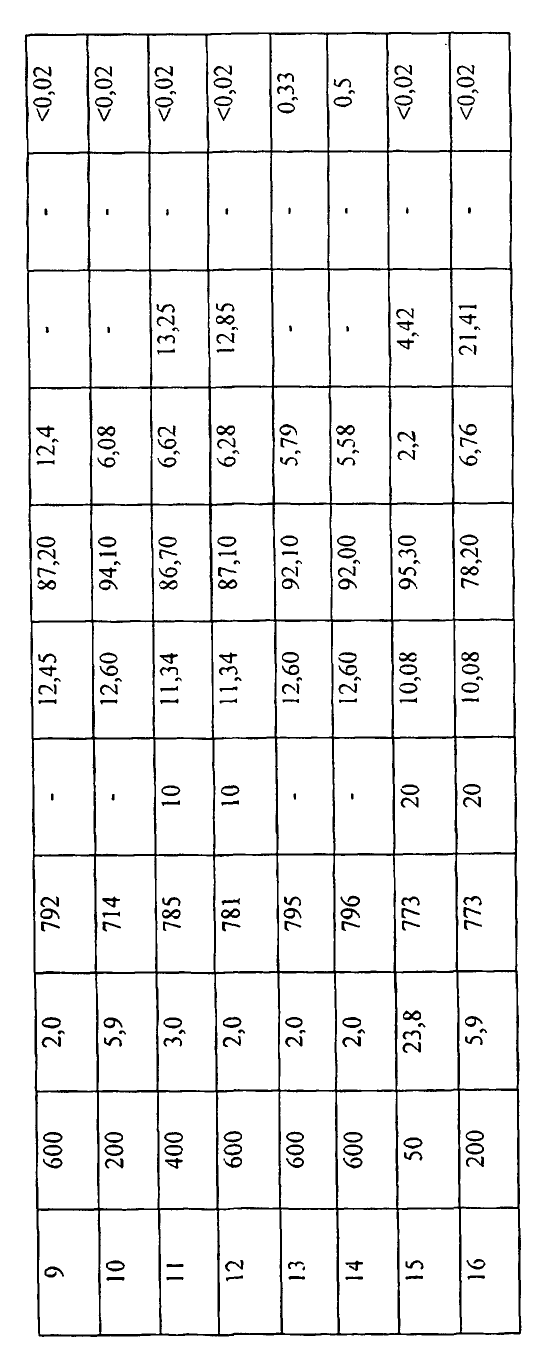

Diese Versuche bestätigen, daß sich N₂O bereits bei ca. 800°C und Verweilzeiten von 2 s thermisch an Inertoberflächen vollständig zersetzen läßt.

## Patentansprüche

1. Verfahren zur thermischen N₂O-Zersetzung in NOₓ- und N₂O-haltigen Gasen, die als Nebenprodukt bei Prozessen anfallen, bei denen HNO₃ in flüssiger Phase als Oxidationsmittel eingesetzt wird, bei einer Temperatur im Bereich von 800 bis 1200°C, und zur HNO₃-Erzeugung, **dadurch gekennzeichnet, daß** das NOₓ und N₂O-haltige Gas durch einen oder mehrere Rekuperativwärmetauscher oder Regenerativwärmetauscher in der Weise geführt wird, daß das umzusetzende Gas beim Führen durch eine Wärmeträgerfüllung auf die Temperatur im Bereich von 800 bis 1200°C erwärmt und das enthaltene N₂O thermisch zersetzt wird, und das umgesetzte Gas durch Wärmetausch unter Erwärmung der Wärmeträgerfüllung und des umzusetzenden Gases abgekühlt wird und sich eine absorptive NOₓ-Abtrennung und eine HNO₃-Erzeugung anschließen.

2. Verfahren nach Anspruch 1, **dadurch gekennzeichnet, daß** bei der absorptiven NOₓ-Abtrennung und HNO₃-Erzeugung NOₓ in Waschkolonnen mit Luft oder Sauerstoff zu NO₂ aufoxidiert, in Wasser absorbiert und letztlich zu HNO₃ umgesetzt wird.

3. Verfahren nach einem der Ansprüche 1 oder 2, **dadurch gekennzeichnet, daß** die Wärmetauscher so regenerativ betrieben werden, daß nach dem Start der Umsetzung keine externe Energiezufuhr notwendig ist.

4. Verfahren nach einem der Ansprüche 1 bis 3, **dadurch gekennzeichnet, daß** die Temperatur des in den oder die Wärmetauscher eintretenden Gases 10 bis 300°C beträgt.

5. Verfahren nach einem der Ansprüche 1 bis 4, **dadurch gekennzeichnet, daß** überschüssige Reaktionswärme mit einem im Hochtemperaturbereich in der Wärmeträgerfüllung angeordneten Dampfregister als Heißdampf abgeführt wird.

6. Verfahren nach einem der Ansprüche 1 bis 4, **dadurch gekennzeichnet, daß** der oder die Regenativwärmetauscher mit Strömungsumkehr betrieben werden.

7. Verfahren nach einem der Ansprüche 1 bis 4, **dadurch gekennzeichnet, daß** ein Regenerativwärmetauscher in rotierender Ausführung verwendet wird.

8. Verfahren nach einem der Ansprüche 1 bis 4, **dadurch gekennzeichnet, daß** zur Wärmeabführung aus der oder nach der Hochtemperaturzone ein bereits gereinigter Teilgasstrom entnommen wird.

9. Verfahren nach Anspruch 8, **dadurch gekennzeichnet, daß** das ausgeschleuste Heißgas einem externen Wärmetauscher zur Energiegewinnung zugeführt wird.

## Claims

1. A process for the thermal decomposition of N₂O in NOₓ- and N₂O-comprising gases which are obtained as by-product in processes in which HNO₃ is used as oxidant in the liquid phase at a temperature in the range from 800 to 1200°C and for the production of HNO₃, wherein the NOₓ- and N₂O-comprising gas is passed through one or more recuperative heat exchangers, or regenerative heat exchangers in such a way that when the gas to be reacted is passed through a charge of heat transfer material it is heated to a temperature in the range from 800 to 1200°C and the N₂O comprised is decomposed thermally, and the reacted gas is cooled by heat exchange so as to heat the charge of heat transfer material and this is followed by an absorptive separation of NOₓ and production of HNO₃.

2. The process according to claim 1, wherein, in the absorptive separation of NOₓ and production of HNO₃, NOₓ is oxidized to NO₂ by means of air or oxygen in scrubbing columns, absorbed in water and finally converted into HNO₃.

3. A process according to claim 1 or 2, wherein the heat exchangers are operated regeneratively in such a way that no external energy input is necessary after the start of the reaction.

4. A process according to any of claims 1 to 3, wherein the temperature of the gas entering the heat exchanger or heat exchangers is from 10 to 300°C.

5. A process according to any of claims 1 to 4, wherein excess heat of reaction is removed as hot steam by means of a steam generator installed in the high-temperature region of the charge of heat exchange material.

6. A process according to any of claims 1 to 4, wherein the regenerative heat exchanger or regenerative heat exchangers is/are operated with flow reversal.

7. A process according to any of claims 1 to 4, wherein a regenerative heat exchanger in a rotating configuration is used.

8. A process according to any of claims 1 to 4, wherein heat is removed by taking off part of the gas stream which has already been purified from the high-temperature zone or downstream of the high-temperature zone.

9. A process according to claim 8, wherein the hot gas which has been discharged is passed to an external heat exchanger for energy recovery.

## Revendications

1. Procédé pour la décomposition thermique de N₂O de gaz contenant NOₓ et N₂O, qui sont obtenus comme produits secondaires dans des processus dans lesquels on met en oeuvre HNO₃ en phase liquide comme agent oxydant, à une température de l'ordre de 800 à 1200°C, et pour la production de HNO₃, **caractérisé en ce que** le gaz contenant NOₓ et N₂O est guidé au travers d'un ou de plusieurs échangeurs de chaleur à récupération ou échangeurs de chaleur à régénération de manière à ce que le gaz à faire réagir soit, au cours du guidage, chauffé par un remplissage d'agent caloporteur à la température de l'ordre de 800 à 1200°C et que le N₂O contenu soit décomposé thermiquement, et **en ce que** le gaz ayant réagi est refroidi par échange thermique en chauffant le remplissage d'agent caloporteur et le gaz à faire réagir, une séparation de NOₓ par absorption et une production de HNO₃ venant ensuite.

2. Procédé suivant la revendication 1, **caractérisé en ce que**, lors de la séparation de NOₓ par absorption et de la production de HNO₃, NOₓ est oxydé dans des colonnes de lavage en NO₂ par de l'air ou de l'oxygène, absorbé dans de l'eau et finalement converti en HNO₃.

3. Procédé suivant l'une des revendications 1 et 2, **caractérisé en ce que** les échangeurs de chaleur sont mis en service avec régénération de façon à ce que, après le démarrage de la réaction, aucun apport d'énergie externe ne soit nécessaire.

4. Procédé suivant l'une des revendications 1 à 3, **caractérisé en ce que** la température du gaz pénétrant dans le ou les échangeurs de chaleur est de 10 à 300°C.

5. Procédé suivant l'une des revendications 1 à 4, **caractérisé en ce que** de la chaleur réactionnelle excédentaire est évacuée sous la forme de vapeur surchauffée à l'aide d'un registre à vapeur agencé dans la zone à haute température du remplissage d'agent caloporteur.

6. Procédé suivant l'une des revendications 1 à 4, **caractérisé en ce que** le ou les échangeurs de chaleur à régénération sont mis en service avec inversion d'écoulement.

7. Procédé suivant l'une des revendications 1 à 4, **caractérisé en ce qu'**un échangeur de chaleur à régénération est utilisé sous une forme de réalisation rotative.

8. Procédé suivant l'une des revendications 1 à 4, **caractérisé en ce qu'**un courant gazeux partiel déjà purifié est, pour l'évacuation de chaleur, prélevé de la zone à haute température ou après celle-ci.

9. Procédé suivant la revendication 8, **caractérisé en ce que** le gaz surchauffé éclusé est amené à un échangeur de chaleur externe pour la production d'énergie.
